# EUROPÄISCHE PATENTSCHRIFT

(11) **EP 1 278 590 B1**
(45) Veröffentlichungstag und Bekanntmachung des Hinweises auf die Patenterteilung: **05.09.2007**
(21) Anmeldenummer: 01929612.8
(22) Anmeldetag: 02.05.2001
(51) Int. Cl.: B01D 71/68, B01D 71/52, B01D 67/00, B01D 71/82

(54) **ORGANISCH-ANORGANISCHE MEMBRANEN**
ORGANIC-INORGANIC MEMBRANES
MEMBRANES ORGANIQUES-INORGANIQUES

(30) Priorität: 02.05.2000 DE 10021104
(43) Veröffentlichungstag der Anmeldung: 29.01.2003
(73) Patentinhaber: Universität Stuttgart - Institut für Chemische Verfahrenstechnik, 70199 Stuttgart (DE); Häring, Thomas, 70619 Stuttgart (DE)
(72) Erfinder: KERRES, Jochen, 73760 Ostfildern (DE); HÄRING, Thomas, 70619 Stuttgart (DE)
(86) Internationale Anmeldenummer: PCT/EP2001/004907
(87) Internationale Veröffentlichungsnummer: WO 2001/083092

(56) Entgegenhaltungen:
- US-A- 4 866 099
- US-A- 5 401 410
- K.A. MAURITZ ET AL.: "chemical modification " POLYMER, Bd. 38, Nr. 6, 1997, Seiten 1345-1356, XP004055776 in der Anmeldung erwähnt

## Beschreibung

### 1. Gegenstand der Erfindung

Gegenstand der Erfindung sind Organisch/anorganisch-Hybrid-Polymerblends und - Polymerblendmembranen, die zusammengesetzt sind aus:
- einem polymeren Säurehalogenid mit -SO₂X-, -POX₂- oder -COX-Gruppen (X=F, Cl, Br, I)
- einem Element- oder Metall-oxid- oder -Hydroxid, das erhalten wurde durch die Hydrolyse und/oder Sol-Gel-Reaktion einer element- und/oder metallorganischen Verbindung während des Membranbildungsprozesses und/oder durch eine Nachbehandlung der Membran in wässrigen sauren, alkalischen oder neutralen Elektrolyten.
Gegenstand dieser Erfindung sind außerdem Hybrid-Blends und -Blendmembranen, die Polymere enthalten, welche SO₃H-, PO₃H₂- und/oder COOH-Gruppen tragen, die durch wässrige, alkalische oder saure Hydrolyse der in dem Polymerblend oder der Polymerblendmembran enthaltenen polymeren Säurehalogenide erhalten werden.

Gegenstand dieser Erfindung sind außerdem Verfahren zur Herstellung dieser Hybrid-Blends und -Blendmembranen.

### 2. Stand der Technik und seine Nachteile

Der Stand der Technik bei Säurechlorid-/anorganischen Hybrid-Composites ist in folgendem Artikel dargelegt:
Nafion-Sulfonylfluorid-Precursormembranen werden in Perfluorohydrophenanthren vorgequollen und in 3-Aminopropyltriethoxysilan eingelegt. Danach wird überschüssiges Silan mit EtOH ausgewaschen. Es entstehen Hybride, bei denen durch Hydrolyse des Silans und durch Reaktion des Silans mit den SO₂F-Gruppen partiell mit dem Polymer vernetzte SiO₂-Netzwerke in der Membranmatrix entstehen¹.
   ¹ Chemical modification of a nafion sulfonyl fluoride percursor via in situ sol-gel reactions A. J. Greso, R. B. Moore, K. M. Cable, W. L. Jarrett, K. A. Mauritz

Nachteil des beschriebenen Systems ist, dass die Sol-Gel-Reaktion in einer vorgeformten Membran stattfindet und mithin der Gehalt des Polymer-Composits an durch die Hydrolyse erzeugter anorganischer Polymerphase nicht nach Wunsch eingestellt werden kann.
Auch Hybrid-Systeme aus nichtionischen Polymeren und Metall-bzw. Elementoxiden wurden in der Literatur beschrieben:
(e) Composites aus Poly(n-Butylmethacrylat) und Titanoxid, hergestellt durch Wasserdampf-Hydrolyse von Titanalkoxiden, die in alkoholischen Lösungen einer Poly(n-Butylmethalcrylat)-Polymerlösung hinzugefügt worden waren, in der Polymermatrix nach Abdampfung des Lösungsmittels²
(f) Compositmembranen aus Polyetherimid und nano-dispergiertem Siliciumoxid, hergestellt durch Hydrolyse von TEOS in Lösungen von Polyetherimid Ultem® in NMP durch Addition von 0.15 M HCl-Lösung. Nach Hydrolyse wurden dichte oder Phaseninversionsmembranen aus dieser Polymerlösung hergestellt. Kompatibilisierung der anorganischen mit der organischen Phase konnte erzielt werden durch zusätzliche Addition von 3-Aminopropyltrimethoxysilan (AS)³.
² Novel Poly(n-Butyl Methacrylate)/Titanium Oxide Alloys Produced by the Sol-Gel process for Titanium Alkoxides
K. A. Mauritz. C. K. Jones J. Appl. Polym. Sci. 40. 1401-1420 (1990
³ Membranes of poly(ether imide) and nanodispersed silica S. P. Nunes. K. V. Peinemann, K. Ohlrogge, A. Alpers, M. Keller, A. T. N. Pires J. Memb. Sci. 157 (1999) 219-Z26

### 3. Aufgabe der Erfindung

Aufgabe der Erfindung ist es, Composites und Compositemembranen aus polymeren Säurehalogeniden bereitzustellen, die zusätzlich eine anorganische Element/Metall-Oxid/Hydroxid-Phase enthalten, welche folgende Membraneigenschaften verbessert:
- mechanische Stabilität
- thermische Stabilität
- verbesserte Wasserhaltefähigkeit auch bei Temperaturen von -100°C, was insbesondere für die Anwendung in Membranbrennstoffzellen im Temperaturbereich von >100°C wichtig ist.

Beim erfindungsgemäßen Verfahren werden organische Vorstufen der Element Oxid oder Hydroxide in die Polymerlösung eingebracht (Alkoxide, Ester. Acetylacetonate etc).

Die Ausbildung der anorganischen Phase im Ionomer erfolgt nach der Membranbildung durch Hydrolyse in saurem, basischem und/oder neutralem wässrigem Milieu, wobei gegebenenfalls gleichzeitig oder in einem weiteren Arbeitsschritt die polymeren Säurehalogenidgruppen zu Säuregruppen hydrolysiert werden können.

### 4. Mit der Erfindung gelöste Aufgabe (Erfindungsbeschreibung)

Es wurde überraschend festgestellt, daß, wenn man Zirkon(IV)propylat 70 Gew.% in 1-Propanol Zr(OCH₂CH₂CH₃)₄ in Lösungen von PSU-Sulfochlorid in Tetrahydrofuran einbringt, das Zirkon(IV)propylat nicht in der Polymerlösung hydrolysiert oder einen schwerlöslichen Komplex bildet, sondern bei der Abdampfung des Lösungsmittel in die Membranmatrix eingebaut wird. Würde man die Zirkon(IV)propylat-Propanol-Lösung mit einer Lösung von PSU-Sulfochlorid (oder PSU-Sulfonsäure oder PSU-Sulfonsäuresalz) in einem dipolar-aprotischen Lösungsmittel wie N-Methylpyrrolidinon mischen, würde das Zirkon(IV)propylat sofort hydrolysieren oder ausfallen.

Es wurde überraschend festgestellt, daß man die organische Zr-Verbindung durch sukzessive Nachbehandlung der Membran in wässriger Lauge und/oder Wasser und/oder Säure zu nanodispers in der Membranmatrix verteiltem Zirkondioxid bzw. Zirkonoxid-hydroxid hydrolysieren kann. Die anorganische Zirkonverbindung kann durch EDX in der Membranmatrix nachgewiesen werden. Auch andere metallorganische Verbindungen wie Ti(acac)₂(OiPr)₂ lassen sich mit PSU-Sulfochloridlösungen in Etherlösungsmitteln ohne Hydrolyse in der Polymerlösung mischen und bei Abdampfung des Lösungsmittels in die Membranmatrix einbauen.

Nachfolgende erfindungsgemäße Komposite und Kompositmembranen sind herstellbar. Komposit mit
- mindestens einem polymeren Säurehalogenid mit -SO₂X-, -FOX₂- oder -COX-Gruppen, wobei X die Bedeutung F, Cl, Br oder I hat, vorzugsweise mit einem Arylhauptkettenpolymer-Rückgrat und
- mindestens einem Salz, Element-, Metall-oxid- oder -Hydroxid, das erhalten wurde durch die Hydrolyse folgender Klassen von element- und/oder metallorganischen Verbindungen:
- Element-Alkoxide und/oder Ester von Ti, Zr, Sn, Si, B, Al
- Metallacetylacetonate, z. B. Ti(acac)₄, Zr(acac)₄
- Mischverbindungen aus Metall/Element-Alkoxiden und Metallacetylacetonaten, z. B. Ti(acac)₂(OiPr)₂ etc.
- organischen Aminoverbindungen von Ti, Zr, Sn, Si, B, Al
während des Membranbildungsprozesses und/oder durch eine Nachbehandlung der Membran in wässrigen sauren, alkalischen oder neutralen Elektrolyten. Durch den gleichen Nachbehandlungsschtitt oder durch einen weiteren wässrigen sauren, alkalischen oder neutralen Nachbehandlungsschritt können dabei gegebenenfalls auch die Säurehalogenidgruppen zu den entsprechenden Säuregruppierungen hydrolysiert werden, so daß Ionomer(blend)membranen mit einer zusätzlichen, nanodispers verteilten anorganischen Phase erhalten werden.
Folgende Lösungsmittel können zur Herstellung der erfindungsgemäßen Membranen verwendet werden: dipolar-aprotische Lösungsmittel wie N-Methylpynolidon (NMP), N,N-Dimethylacetamid (DMAc), N,N-Dimethylformamid (DMF), Dimethylsulfoxid (DMSO) oder Sulfolan oder Etherlösungsmittel wie Tetrahydrofuran, Dioxan, Glyme, Diglyme, Triglyme.
Durch die nanodispers in der Membranmatrix verteilte, erfindungsgemäß eingebrachte anorganische Phase wird das Eigenschaftsprofil von Säurehalogenidpolymer(blends) oder protonenleitenden Ionomer(blends) und Ionomer(blend)membranen nachhaltig verändert. Die Protonenleitfähigkeit steigt während die Quellung nicht im entsprechenden Maße, wie sonst üblich zunimmt.
Abhängig vom Gehalt und von der Art der nanodispersen Komponente verändert sich die Permselektivität der Membranen auch für nichtionische permitierende Moleküle (z.B. Gase).
Erfolgt die Hydrolyse in Phosphorsäure oder erfolgt nach der Hydrolyse eine weitere Nachbehandlung der Membranen mit Phosphorsäure, so werden in der Membranmatrix die entsprechenden Metall- oder Elementphosphate oder -hydrogenphosphate oder - dihydrogenphosphate generiert die ihrerseits wieder zur Protonenleitfähigkeit beitragen.

### 5. Ausführungsbeispiele

### 5.1 Herstellung der Ionomerblendmembran TH785

0,5 g PSU-Sulfochlorid mit etwa 1 Sulfochloridgruppe pro Wiederholungseinheit wird in 3 g THF gelöst. Danach werden 0,5307 g einer 70 Gew%igen Lösung von Zickon(IV)propylat) in 1-Propanol zugegeben. Die Lösung wird entgast, und danach in eine Petrischale gegossen. Man läßt das Lösungsmittel bei Raumtemperatur über Nacht abdampfen. Danach wird die gebildete Membran fölgendermaßen nachbehandelt:
(1) in 10% NaOH bei 80°C für 24 h
(2) in 10% Schwefelsäure bei 80°C für 24 h
(3) in Wasser bei 85°C für 16 h

### Charakerisierungsergebnisse:

| | |
|---|---|
| IEC [meq SO₃H/g]: | 0.77 |
| Quellung [%]: | 30,9 |
| RₛₚH⁺ (0,5 N HCl) [Ω cm]: | 28,9 |

### 5.2 Herstellung der Ionomerblendmembran TH782

0,5 g PSU-Sulfochlorid mit etwa 1 Sulfochloridgruppe pro Wiederholungseinheit wird in 2,5 g THF gelöst. Danach werden 0,8817 g einer 75 Gew%igen Lösung von Titan(IV)-bisacetylacetonato)-diisopropylat in 2-Propanol zugegeben. Die Lösung wird entgast, und danach in eine Petrischale gegossen. Man läßt das Lösungsmittel bei Raumtemperatur über Nacht abdampfen. Danach wird die gebildete Membran folgendermaßen nachbehandelt:
(1) in 10% NaOH bei 80°C für 24 h
(2) in 10% Schwefelsäure bei 80°C für 24 h
(3) in Wasser bei 85°C für 16 h

### Charakerisierungsergebnisse:

| | |
|---|---|
| IEC [meq SO₃H/g]: | 0,81 |
| Quellung [%]: | 39,4 |
| Rₛₚ^{H+} (0,5 N HCl) [Ω cm]: | 12 |

### 6. Neuheit der Erfindung

Die erfindungsgemäßen neuen Anorganisch-Organisch-Hybrid-Ionomer(blend)membranen und das Verfahren zur Herstellung derselben sind bisher in der Literatur nach meinem Wissen nicht beschrieben worden, weder durch eigene noch durch fremde Publikationen.

### 7. Vorteile der Erfindung

Die erfindungsgemäßen neuen Anorganisch/Organisch-Hybridmembranen weisen ein hervorragendes Eigenschaftsprofil auf:
● gute Protonenleitfähigkeit
● gute thermische Stabilität
● gute mechanische Stabilität.
● limitierte Quellung.

Einige erfindungsgemäße Membranen zeigen, verursacht durch das anorganische Oxid oder hydroxid in der Membranmatrix, eine verbesserte Wasserhaltefähigkeit insbesondere bei T>80°C. Es wird vermutet, dass die nanodisperse Verteilung der anorganischen Komponente in der Membran die Ursache dafür ist. Durch Einmischung von Oxidpulvern in Ionomermembranen, wie bereits in einigen Publikationen vorgeschlagen wurde⁴, läßt sich keine so feine Verteilung der anorganischen Komponente in der Membranmatrix erreichen wie beim erfindungsgemäßen Verfahren, bei dem die elementorganischen Verbindungen erst in der Membranmatrix zum Oxid bzw. (hydrogen) Phosphat hydrolysiert werden. Je nach spezifischer Zusammensetzung zeigen die erfindungsgemäßen Membranen noch weitere Vorteile:
- erniedrigte Methanolpermeabilität
- Beitrag zur Protonenleitung, insbesondere bei T>80°C
- veränderte Permselektivität, sowohl für geladene als auch ungeladene Teilchen
- die Membranen sind photochemisch aktiv, besonders die mit nanodispersem Titandioxid.
- spezielle Zusammensetzungen (mit Titandioxid) zeigen photolumineszens
⁴ Comparison of Ethanol and Methanol Oxidation in a Liquid-Feed Solid Polymer Electrolyte Fuel Cell at High Temperature A. S. Arico, P. Creti, P. L. Antonucci, V. Antonucci Electrochem. Sol. St. Lett. 182) 66-68 (1998)

### 8. Schlagworte

Arylhauptkettenpolymere
Sol-Gel Prozess
Hydrolyse
Metall- und Elementalkoxide von Ti, Zr, Sn, Si, B, Al
Metall- und Elementacetylacetonate Ti(acac)₄, Zr(acac)₄
Mischverbindungen aus Metall/Element-Alkoxiden und Metallacetylacetonaten
Ti(acac)₂(OiPr)₂
organischen Aminoverbindungen von Ti, Zr, Sn, Si, B, Al
Elementoxide
Metalloxide
Elementhydroxide
Metallhydroxide
wasserhaltige Oxide
wasserhaltige Phophate
Wasserhaltefähigkeit
Protonenleitfähigkeit
Polysulfon Udel®
Polyetheretherketon Victrex®
polymere Säurehalogenide
Kationenaustauscherpolymere
Kationenaustauscherpolymermembranen
polymerer Protonenleiter
Eigenprotonenleitfähigkeit
Membranbrennstoffzellen
H₂-Brennstoffzellen
Direktmethanol-Brennstoffzellen
Membranen
Membranverfahren
Anwendungstemperatur >80°C
thermische Stabilität

## Patentansprüche

1. Kompositmembranen, umfassend (A) wenigstens ein polymeres Säurehalogenid, **dadurch gekennzeichnet, dass** das Polymer ein Arylhauptkettenpolymer, ausgewählt aus der Gruppe der Polyethersulfone, Polysulfone, Polyphenylsulfone, Polyetherethersulfone, Polyetherketone, Polyetheretherketone, Polyphenylenether, Polydiphenylphenylenether, Polyphenylensulfide oder ein Copolymer, das mindestens eine dieser Komponenten enthält, ist und SO₂X-, POX₂-, COX- oder BX₂-Gruppen aufweist, wobei X die Bedeutung F, Cl, Br oder I hat,
und wenigstens
(B) ein(e) nanodispers verteilte(s,r)
Salz,
Element-Alkoxid und/oder Ester von Ti, Zr, Sn, Si, B, Al,
Metallacetylacetonat, z. B. Ti(acac)_{4,} Zr(arac)_{4,}
Mischverbindung aus Metall- und/oder Element-Alkoxid,
Metallacetylacetonat, z. B. Ti(acac)₂(OiPr)₂ etc.
oder
organische Aminoverbindung von Ti, Zr, Sn, Si, B, Al.

2. Membranen nach Anspruch 1, **dadurch gekennzeichnet, dass**
(A) die SO₂X-, POX₂-, COX- oder BX₂-Gruppen, wobei X die Bedeutung F, Cl, Br oder I hat, des Membranpolymers durch eine nach der Membranbildung erfolgte Hydrolysereaktion in SO₃Y-, PO₃Y₂-, COOY- oder B(OY)₂-Gruppen, wobei Y die Bedeutung H, ein- oder zweiwertiges Metallkation, Ammoniumion, Imidazoliumion, Pyrazoliumion, Pyridiniumion hat, umgewandelt werden.

3. Membranen nach 1 oder 2, **dadurch gekennzeichnet, daß** sie noch zusätzlich kovalent vernetzt sind.

4. Membran nach einem oder mehreren der Ansprüche 1 bis 3, **dadurch gekennzeichnet, daß** sie Elementphosphate und/oder -hydrogenphosphate und/oder -dihydrogenphosphate enthält, die erhalten wurden durch eine Nachbehandlung der Membran, erhalten nach einem der Ansprüche 1 bis 3, mit 1 bis 100%-iger Phosphorsäure.

5. Verfahren zur Herstellung von Membranen nach einem oder mehreren der Ansprüche 1 bis 4 **dadurch gekennzeichnet, daß** man folgende Komponenten in einem dipolar-aprotischen Lösungsmittel wie N-Methylpyrrolidinon (NMP), N,N-Dimethylacetamid (DMAc), N,N-Dimethylformamid (DMF), Dimethylsulfoxid (DMSO) oder Sulfolan oder in einem Etherlösungsmittel wie Tetrahydrofuran, Dioxan, Glyme, Diglyme, Triglyme zusammenmischt: ein polymeres Säurehalogenid mit SO₂X-, POX₂-, COX- oder BX₂-Gruppen, wobei X die Bedeutung F, Cl, Br oder I hat, und mindestens metall- oder elementorganische Verbindungen gemäß der Verbindungen aus Anspruch 1, und man aus der Polymerlösung dünne Filme auf einer Unterlage, Wie Glas- oder Metallplatte, Gewebe, Vlies, poröse (polymer)membran, zieht, das Lösungsmittel bei Temperaturen von Raumtemperatur bis 150°C bei Normaldruck oder im Vakuum abdampft, und den gebildeten dünnen Film folgendermaßen nachbehandelt, wobei die Reihenfolge der Nachbehandlungsschritte variieren und auch ggf. die Schritte (1) und/oder (2) und/oder (3) weggelassen werden können:
(1) in Wasser bei T=50 bis 100°C
(2) in 1 bis 100%iger Mineralsäure, wie Halogenwasserstoffsäure, Schwefelsäure, Phosphorsäure, bei T=50 bis 100°C
(3) in 1 bis 50%iger wässriger Lauge, wie z. B. Ammoniaklösung, Aminlösung, Natronlauge, Kalilauge, Natriumcarbonatlösung, Calciumhydroxidlösung, Bariumhydroxidlösung oder in einem wasserfreien flüssigen Amin oder Gemisch verschiedener Amine
(4) in Wasser bei T=50 bis 100°C.

6. Verwendung der Membranen nach Anspruch 1,4 und/oder 5 zur Gewinnung von Energie auf elektro-chemischem Weg.

7. Verwendung der Membranen nach Anspruch 1,4 und/oder 5 zur Gewinnung von Energie oder Stoffen auf photo-chemischem Weg.

8. Verwendung der Membranen nach Anspruch 1,4 und/oder 5 als Bestandteil von Membranbrennstoffzellen, z.B. H₂- oder Direktmethanol-Brennstoffzellen bei Temperaturen von 0 bis 180°C.

9. Verwendung der Membranen nach Anspruch 1,4 und/oder 5 in elektrochemischen Zellen.

10. Verwendung der Membranen nach Anspruch 1,4 und/oder 5 in sekundären Batterien.

11. Verwendung der Membranen nach Anspruch 1,4 und/oder 5 in Elektrolysezellen.

12. Verwendung der Membranen nach Anspruch 1,4 und/oder 5 in Membrantrennprozessen wie Gastrennung, Pervaporation, Perstraktion, Umkehrosmose, Elektrodialyse, und Diffusionsdialyse.

## Claims

1. Composites membranes, comprising (A) at least one polymeric acid halide, **characterized in that** the polymer is an aryl main chain polymer, chosen from the group of polyether sulfones, polysulfones, polyphenylsulfones, polyether ether sulfones, polyether ketones, polyether ether ketones, polyphenylene ethers, polydiphenylphenylene ethers, polyphenylene sulfides or a copolymer, that contains at least one of these components, and has SO₂X-, POX₂-,COX - or BX₂-groups, wherein X means F, Cl, Br or I,
and at least
(B) a nanodispersed
salt,
element-alkoxide and/ester of Ti, Zr, Sn, Si, B, Al,
metal acetylacetonate, e.g. Ti(acac)₄, Zr(acac)₄,
mixed compound of metal and/or element-alkoxide,
metal-acetylacetonate, e.g. Ti(acac)₂(OiPr)₂ etc.
or
organic amino compound of Ti, Zr, Sn, Si, B, Al.

2. Membranes according to claim 1, **characterized in that**
(A) the SO₂X -, POX₂ COX- or BX₂-groups, wherein X means F, Cl, Br or I, of the membrane polymer are converted by a hydrolysis reaction which happens after membrane formation into SO₃Y-, PO₃Y₂ -, COOY- or B(OY)₂-groups, wherein Y means H, an univalent or bivalent metal cation, ammonium ion, imidazolium ion, pyrazolium ion, pyridinium ion.

3. Membranes according to claim 1 or 2 **characterized in that** these membranes are additionally covalently cross-linked.

4. Membrane according to one or more of claims 1 to 3, **characterized in that** it contains element phosphates and/or element hydrogenphosphates and/or element dihydrogenphosphates, which are obtained by a posttreatment of the membrane, obtained according to one of claims 1 to 3, with 1 to 100 percent phosphoric acid.

5. Process for the preparation of membranes according to one or more of claims 1 to 4, **characterized in that** the following components are mixed in a dipolar-aprotic solvent such as N-methylpyrrolidinone (NMP), N,N-dimethylacetamide (DMAc), N,N-dimethylformamide (DMF), dimethylsulfoxide (DMSO) or sulfolane or in an ether solvent such as tetrahydrofuran, dioxan, glyme, diglyme, triglyme: a polymeric acid halide with SO₂X-, POX₂- COX- or BX₂-groups wherein X means F, Cl, Br or I, and at least organometallic or element organic compounds according to the compounds of claim 1, and that the polymer solution is cast into thin films on a support such als glass-plate or metal-plate, tissue, woven fabric, fleece, porous (polymer)membrane), the solvent is evaporated at temperatures of from room temperature to 150°C at normal pressure or under vacuum and the formed thin film is posttreated as follows,
whereby the order of posttreatment steps can vary and also optionally steps (1)
and/or (2)
and/or (3) can be omitted:
(1) in water at T=50 to 100°C
(2) in 1 to 100% mineral acid (hydrohalic acid, sulfuric acid,
phosphoric acid) at T=50 to 100°C
(3) in 1 to 50% aqueous base e.g. ammonia solution, amine solution,
sodium hydroxide solution, potassium hydroxide solution, sodium carbonate solution, calcium hydroxide solution, barium hydroxide solution or in an anhydrous liquid amine or
mixture of different amines
(4) in water at T=50 to 100°C.

6. Use of membranes according to claim 1, 4 and/or 5 to produce energy by an electrochemical way.

7. Use of membranes according to claim 1, 4 and/or 5 to produce energy or substances by a photochemical way.

8. Use of membranes according to claim 1, 4 and/or 5 as component in membrane fuel cells e.g. H₂ or direct methanol fuel cells at temperatures of from 0 to 180°C.

9. Use of membranes according to claim 1, 4 and/or 5 in electrochemical cells.

10. Use of membranes according to claim 1 , 4 and/or 5 in secondary batteries.

11. Use of membranes according to claim 1, 4 and/or 5 in electrolysis cells.

12. Use of membranes according to claim 1 , 4 and/or 5 in membrane separation processes such as gas separation, pervaporation, perstraction, reverse osmosis, electrodialysis and diffusion dialysis.

## Revendications

1. Composites de membrane, contenant (A) au moins un halogénure d'acide polymérique, **caractérisés en ce que** le polymère est un polymère à chaîne principale aryl, choisi parmi le groupe des polyéthersulfones, polysulfones, polyphénylsulfones, polyétheréthersulfones, polyéthercétones, polyétheréthercétones, polyphénylenéthers, polydiphénylphénylenéthers, polyphénylensulfides où est un copolymère, qui contient au moins un de ses composants et contient des groupes SO₂X-, POX₂-, COX ou BX₂, où X a la signification F, Cl, Br ou I et (B) au moins un sel, élément-alcoxide ou ester nano dispersé de Ti, Zr, Sn, Si, B, Al, métalacétylacétonate, p.e. Ti(acac)₄, Zr(acac)₄, composés mixte de métal-alcoxide et/ou élément-alcoxide, métalacétylacétonate, p.e. Ti(acac)₂(OiPr)₂ etc. ou un composé aminé organique de Ti, Zr, Sn, Si, B, Al.

2. Composites de membrane selon la revendication 1, **caractérisés en ce que** (A) les groupes SO₂X-, POX₂-, COX ou BX₂, où X a la signification F, Cl, Br ou I, du polymère membranaire sont transformés par une réaction d'hydrolyse après la formation de la membrane en groupes SO₃Y-, PO₃Y₂-, COOY ou B(OY)₂ où Y a la signification H, cation métallique de valence un ou deux, ion d'ammonium, ion d'imidazolium, ion pyrazolium, ion pyridinium.

3. Membranes selon les revendications 1 ou 2, **caractérisés en ce qu'**ils sont en plus ramifiés covalents.

4. Membrane selon un ou plusieurs des revendications 1 à 3, **caractérisés en ce qu'**elle contient des phosphates et/ou des hydrogénophosphates et/ou des dihydrogénophosphates d'élément, obtenu par un après-traitement de la membrane obtenue selon un ou plusieurs revendications 1 à 3 avec l'acide phosphorique de 1 à 100 %.

5. Procédé pour la production de membranes selon un ou plusieurs des revendications 1 à 4, **caractérisé en ce que** l'on mélange les composantes suivantes dans un solvent dipolaire-aprotique choisi parmi N-méthylpyrrolidinone (NMP), N,N-diméthylacetamide (DMAc), N,N-diméthylformamide (DMF), diméthylsulfoxide (DMSO) ou sulfolane ou solvent éther comme tétrahydrofurane, dioxane, glyme, diglyme, triglyme : un halogénure d'acide polymérique avec des groupes SO₂X-, POX₂-, COX ou BX₂, où X a la signification F, Cl, Br ou I et au moins des composés organométallique ou organo-élément selon les composés de la revendication 1, et que l'on fait à partir de la solution de polymère des films minces sur un support comme plaque vitrée ou métallique, tissue, vlies, membrane (polymérique) poreuse, que l'on évaporise le solvent à température ambiante jusqu'à 150 °C à la pression atmosphérique ou sous vide, et que l'on traite après le film mince formé de la manière suivante, encore que l'ordre des étapes de l'après-traitement peut varier et aussi le cas écheant les étapes (1) et/ou (2) et/ou (3) peuvent être annulées:
(1) dans l'eau de T=50 à 100°C
(2) dans l'acide minérale de 1 à 100%, comme acide minérale halogène, acide sulfurique, acide phosphorique, de T=50 à 100°C
(3) dans une base aqueuse comme par ex. solution ammoniacale, solution d'amine, soude, potasse, solution de carbonate de sodium, solution d'hydroxide de calcium, solution d'hydroxide de baryum ou dans un amine liquide exempte d'eau ou dans un mélange de différents amines liquides.
(4) dans l'eau de T=50 à 100°C.

6. Utilisation des membranes selon la revendication 1, 4 et/ou 5 pour gain d'énergie par voie électrochimique.

7. Utilisation des membranes selon la revendication 1, 4 et/ou 5 pour gain d'énergie ou de matière par voie photochimique.

8. Utilisation des membranes selon la revendication 1, 4 et/ou 5 comme composante des piles à combustibles à membrane, par exemple piles à combustible d'hydrogène ou direct de méthanol, à des températures de 0 à 180 °C.

9. Utilisation des membranes selon la revendication 1, 4 et/ou 5 dans des cellules électrochimiques.

10. Utilisation des membranes selon la revendication 1, 4 et/ou 5 dans des piles secondaires.

11. Utilisation des membranes selon la revendication 1, 4 et/ou 5 dans des cellules d'électrolyse.

12. Utilisation des membranes selon la revendication 1, 4 et/ou 5 dans des procédés de séparation par membrane comme séparation de gaz, pervaporation, perstraktion, osmose inverse, électrodialyse et dialyse de diffusion.
